(19) Europäisches Patentamt
European Patent Office
Office européen des brevets

(11) EP 4 717 716 A1

(12) EUROPEAN PATENT APPLICATION
published in accordance with Art. 153(4) EPC

(43) Date of publication:
**01.04.2026 Bulletin 2026/14**

(21) Application number: **24810777.3**

(22) Date of filing: **16.04.2024**

(51) International Patent Classification (IPC):
***C08F 212/14* (2006.01)** ***B01J 41/04* (2017.01)**
***B01J 41/14* (2006.01)** ***C08F 2/44* (2006.01)**
***C08F 2/48* (2006.01)** ***C08J 5/22* (2006.01)**
***C08K 5/05* (2006.01)** ***C08L 25/18* (2006.01)**
***C25B 1/04* (2021.01)** ***C25B 9/00* (2021.01)**
***C25B 13/08* (2006.01)** ***H01M 8/1004* (2016.01)**

(52) Cooperative Patent Classification (CPC):
**B01J 41/04; B01J 41/14; C08F 2/44; C08F 2/48; C08F 212/14; C08J 5/22; C08K 5/05; C08L 25/18; C25B 1/04; C25B 9/00; C25B 13/08; H01M 8/1004**

(86) International application number:
**PCT/JP2024/015190**

(87) International publication number:
**WO 2024/241769 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.05.2023 JP 2023083626**

(71) Applicant: **TOKUYAMA CORPORATION**
**Yamaguchi 745-8648 (JP)**

(72) Inventors:
- **UWAMORI, Masahiro**
  **Shunan-shi, Yamaguchi 745-8648 (JP)**
- **ASADA, Yosuke**
  **Shunan-shi, Yamaguchi 745-8648 (JP)**
- **ISOMURA, Takenori**
  **Shunan-shi, Yamaguchi 745-8648 (JP)**

(74) Representative: **Watermeyer, Nicholas**
**Withers & Rogers LLP**
**2 London Bridge**
**London SE1 9RA (GB)**

# (54) POLYMERIZABLE COMPOSITION, ION EXCHANGE RESIN, ION EXCHANGE MEMBRANE, MEMBRANE ELECTRODE ASSEMBLY, AND HYDROGEN PRODUCTION DEVICE

(57) Provided are: a polymerizable composition containing a quaternary ammonium salt represented by formula (I), a polymerizable monomer, a linear or branched C1-4 alkylene glycol, and at least one hydroxyl group-containing compound selected from the group consisting of a C4-15 primary alcohol, a C4-15 secondary alcohol, and a C5-15 diol which has a hydroxy group bonded to a secondary carbon atom; an ion exchange resin; an ion exchange membrane; a membrane electrode assembly; and a hydrogen production device.

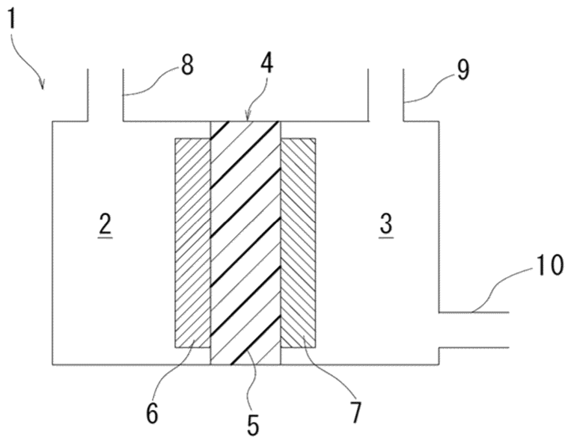


Fig. 1

EP 4 717 716 A1

## Description

Technical Field

The present invention relates to a polymerizable composition, an ion-exchange resin, an ion-exchange membrane, a membrane electrode assembly, and a hydrogen production device.

Background Art

As a method for producing hydrogen, a water electrolysis method of electrolyzing water to generate hydrogen gas and oxygen gas has been studied. Hydrogen produced by using, as electric power, energy obtained by a method configured to suppress generation of carbon dioxide is called $CO_2$-free hydrogen or green hydrogen, and is expected as next-generation clean energy to replace fossil fuels.

Among water electrolysis methods, an anion-exchange membrane (AEM) water electrolysis method using the AEM has been attracting attention because it does not require the use of expensive rare metals as catalysts. An AEM water electrolysis device includes, for example, an AEM, and an anode chamber and a cathode chamber which are separated by the AEM and respectively include an anode and a cathode. The AEM is obtained by, for example, filling a porous substrate with an ion-exchange resin. It is known to use a resin having a quaternary ammonium group as the ion-exchange resin.

Prior Art Documents

Patent Document

Patent Document 1: JP 2022-502522 A
Patent Document 2: WO 2016/027595
Patent Document 3: WO 2011/125717

Summary of Invention

Technical Problem

An object of the present invention is to provide a polymerizable composition capable of efficiently producing a cured product, an ion-exchange resin including a cured product of the polymerizable composition, an ion-exchange membrane, a membrane electrode assembly, and a hydrogen production device.

Solution to Problem

According to a first embodiment of the present invention, a polymerizable composition is provided. The polymerizable composition contains a quaternary ammonium salt represented by the following Formula (I), a polymerizable monomer, a linear or branched alkylene glycol having carbon number of 1 or more and 4 or less, and a hydroxy group-containing compound. The hydroxy group-containing compound includes at least one selected from the group consisting of a primary alcohol having carbon number of 4 or more and 15 or less, a secondary alcohol having carbon number of 4 or more and 15 or less, and a diol having carbon number of 5 or more and 15 or less, the diol having a hydroxy group bonded to a secondary carbon atom.

[Chem 1]

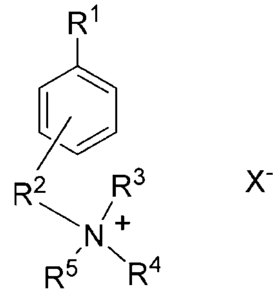

(I)

In the above Formula (I), $R^1$ is an alkenyl group having carbon number of 2 or more and 5 or less. $R^2$ is an alkylene group having carbon number of 1 or more and 10 or less. $R^3$, $R^4$, and $R^5$ each independently represent a linear or branched alkyl group having carbon number of 1 or more and 4 or less, or a linear or branched alkoxy group having carbon number of 1 or more and 4 or less. $X^-$ is an anion.

According to a second embodiment of the present invention, an ion-exchange resin is provided. The ion-exchange resin contains at least one of a cured product of the polymerizable composition according to the first embodiment and an ion exchanger of an anion of the cured product.

According to a third embodiment of the present invention, an ion-exchange membrane is provided. The ion-exchange membrane includes the ion-exchange resin according to the second embodiment and a substrate.

According to a fourth embodiment of the present invention, a membrane electrode assembly is provided. The membrane electrode assembly includes the ion-exchange membrane according to the third embodiment and an electrode.

According to a fifth embodiment of the present invention, a hydrogen production device is provided. The hydrogen production device includes the ion-exchange membrane according to the third embodiment.

## Effects of Invention

According to the present invention, there are provided a polymerizable composition capable of efficiently producing a cured product, an ion-exchange resin including the cured product of the polymerizable composition, an ion-exchange membrane, a membrane electrode assembly, and a hydrogen production device.

## Brief Description of Drawings

[Fig. 1] Fig. 1 is a cross-sectional view schematically showing an example of a hydrogen production device according to an embodiment.

## Description of Embodiments

Embodiments of the present invention are described in detail below, but as long as the gist of the present invention is observed, the present invention is not limited to the details described below. In addition, the present invention can be modified and implemented in any manner that does not depart from the gist of the present invention. Further, when numerical ranges are described in a stepwise manner, the upper limit and the lower limit of each numerical range can be optionally combined.

In addition, the expression "A or B" in the present specification can be read as "at least one selected from the group consisting of A and B".

In addition, the expression "an amount of B relative to an amount of A" in the present specification represents "the amount of B/the amount of A".

In addition, although a plurality of embodiments will be described in the present specification, various conditions in the embodiments can be applied to each other within an applicable range.

In the present specification, a numerical range expressed using the term "to" refers to a range including the numerical values described before and after "to" as the lower limit and the upper limit, respectively. Thus, the expression "A to B" means A or more and B or less.

A polymerizable composition according to a first embodiment (hereinafter, also simply referred to as a "polymerizable composition") contains a quaternary ammonium salt represented by the above Formula (I), a polymerizable monomer, a linear or branched alkylene glycol having carbon number of 1 or more and 4 or less, and a hydroxy group-containing compound. The hydroxy group-containing compound includes at least one selected from the group consisting of a primary alcohol having carbon number of 4 or more and 15 or less, a secondary alcohol having carbon number of 4 or more and 15 or less, and a diol having carbon number of 5 or more and 15 or less, the diol having a hydroxy group bonded to a secondary carbon atom.

When such a polymerizable composition is used, a cured product can be efficiently produced. In general, it is considered that the compatibility of the quaternary ammonium salt having a polymerizable group represented by Formula (I) with the polymerizable monomer tends to be lower than that of a typically known primary ammonium salt having a polymerizable group. However, as a result of intensive studies, the present inventors have found that a polymerizable composition in which the quaternary ammonium salt having the polymerizable group represented by Formula (I) and the polymerizable monomer are hardly separated can be obtained by using a linear or branched alkylene glycol having carbon number of 1 or more and 4 or less and a hydroxy group-containing compound as a co-solvent. Although the reason for this is not clear, it is considered that the compatibility of the hydroxy group-containing compound is excellent with respect to both the quaternary ammonium salt and the polymerizable monomer, or the hydroxy group-containing compound exhibits

an effect as a surfactant. When such a polymerizable composition that is excellent in compatibility and less likely to cause phase separation is used, a cured product can be continuously produced without stirring the polymerizable composition or the like. In addition, the polymerizable composition according to the first embodiment can realize excellent compatibility even when a photopolymerization initiator having low compatibility with the quaternary ammonium salt or the polymerizable monomer is added. Therefore, the polymerizable composition is advantageously used as a polymerizable composition for photocuring.

[Polymerizable Composition]

The polymerizable composition is typically liquid under normal temperature and normal pressure. As used here, the normal temperature means a temperature of 20°C or more and 40°C or less, and the normal pressure means 1 atm. The viscosity of the polymerizable composition at 25 °C by a tuning fork vibration-type viscosity measurement method is 300 mPa·s or less as one example and 100 mPa·s or less as another example. In addition, the viscosity is 75 mPa·s or more as one example and 50 mPa·s or more as another example. When the liquid polymerizable composition is used, an ion-exchange resin having high performance of ion-exchange can be realized.

The polymerizable composition contains a quaternary ammonium salt represented by the following Formula (I), a polymerizable monomer, a linear or branched alkylene glycol having carbon number of 1 or more and 4 or less, and a hydroxy group-containing compound.

[Chem 2]

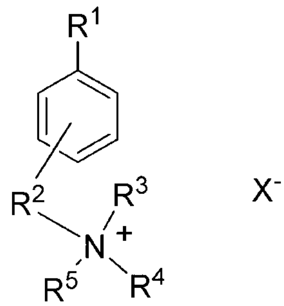

(I)

In the above Formula (I), $R^1$ is an alkenyl group having carbon number of 2 or more and 5 or less. $R^1$ can be linear or branched and is preferably linear. $R^1$ preferably represents a vinyl group or an allyl group, and more preferably the vinyl group.

$R^2$ represents an alkylene group having carbon number of 1 or more and 10 or less. $R^2$ can be linear or branched and is preferably linear. $R^2$ preferably represents an alkylene group having carbon number of 1 or more and 5 or less, more preferably a methylene group or an ethylene group, and still more preferably the methylene group.

$R^3$, $R^4$, and $R^5$ each independently represent a linear or branched alkyl group having carbon number of 1 or more and 4 or less, or a linear or branched alkoxy group having carbon number of 1 or more and 4 or less. $R^3$, $R^4$, and $R^5$ preferably each independently represent a linear alkyl group having carbon number of 1 or more and 4 or less, more preferably a methyl group or an ethyl group, and particularly preferably the methyl group. $R^3$ to $R^5$ can be the same as or different from each other and are preferably all the same as each other.

$X^-$ can be a monovalent anion or a divalent anion. $X^-$ is, for example, a halide ion, tetrafluoroborate, a bicarbonate ion, a hydroxide ion, triflate, or bistrifluoromethanesulfonimide. The halide ion is, for example, a fluoride ion, a chloride ion, or a bromide ion. $X^-$ is preferably a chloride ion, triflate, or bistrifluoromethanesulfonimide, and more preferably the chloride ion. When $X^-$ is the chloride ion, an ion-exchange resin having a large amount of ion-exchange groups per unit mass can be realized. When $X^-$ is triflate or bistrifluoromethanesulfonimide, the solubility of the composition is increased, and the concentration of the quaternary ammonium salt in the polymerizable composition tends to be easily increased.

Specific examples of the quaternary ammonium salt include a (vinylbenzyl)trialkylammonium salt, a 4-ethenyl-N,N-dimethylbenzeneethanaminium salt, and a 4-ethenyl-N,N-dimethylbenzenepropanaminium salt.

Specific examples of the (vinylbenzyl)trialkylammonium salt include (vinylbenzyl)trimethylammonium chloride, (vinylbenzyl)trimethylammonium triflate, (vinylbenzyl)trimethylammonium bistrifluoromethanesulfonimide, (vinylbenzyl)dimethylethylammonium chloride, (vinylbenzyl)dimethylethylammonium triflate, (vinylbenzyl)dimethylethylammonium bistrifluoromethanesulfonimide, (vinylbenzyl)trimethylammonium tetrafluoroborate, (vinylbenzyl)trimethylammonium bicarbonate, and (vinylbenzyl)trimethylammonium hydroxide.

Other specific examples of the quaternary ammonium salt include 4-ethenyl-N,N-dimethylbenzeneethanaminium chloride, 4-ethenyl-N,N-dimethylbenzeneethanaminium triflate, 4-ethenyl-N,N-dimethylbenzeneethanaminium bistrifluoromethanesulfonium, 4-ethenyl-N,N-dimethylbenzeneethanaminium hydroxide, 4-ethenyl-N,N-dimethylbenzenepropanaminium chloride, 4-ethenyl-N,N-dimethylbenzenepropanaminium triflate, 4-ethenyl-N,N-dimethylbenzenepropanaminium bistrifluoromethanesulfonium, and 4-ethenyl-N,N-dimethylbenzenepropanaminium hydroxide.

As the quaternary ammonium salt, the (vinylbenzyl)trialkylammonium salt is preferably used, and at least one salt selected from the group consisting of (vinylbenzyl)trimethylammonium chloride, (vinylbenzyl)trimethylammonium triflate, and (vinylbenzyl)trimethylammonium bistrifluoromethanesulfonylimide is more preferably used.

The proportion (content) of the quaternary ammonium salt in the polymerizable composition is, for example, 5 mass% or more and 95 mass% or less. This proportion is preferably 40 mass% or more, preferably 50 mass% or more, and more preferably 60 mass% or more. When the proportion is high, the ion-exchange resin having the large amount of ion-exchange groups per unit mass tends to be obtained. This proportion can be 92 mass% or less, 85 mass% or less, or 80 mass% or less.

The proportion of the quaternary ammonium salt in the polymerizable composition can be measured by, for example, subtracting the weight of the quaternary ammonium salt remaining unreacted after the polymerization reaction from the total mass of the quaternary ammonium salt used as a raw material.

In the polymerizable composition, the proportion of the quaternary ammonium salt can vary depending on the type of the quaternary ammonium salt. The content of vinylbenzyltrimethylammonium chloride is, for example, 60 mass% or more and 70 mass% or less. The content of vinylbenzyltrimethylammonium triflate is, for example, 75 mass% or more and 85 mass% or less. The concentration of vinylbenzyltrimethylammonium bistrifluoromethanesulfonimide is, for example, 85 mass% or more and 95 mass% or less.

The polymerizable monomer can be a comonomer that is polymerized with the quaternary ammonium salt. The polymerizable monomer can form a cross-link between the quaternary ammonium salts to enhance the durability of the cured product.

The polymerizable monomer can have one radically polymerizable group in one molecule or two or more radically polymerizable groups in one molecule. Examples of the radically polymerizable group include a vinyl group, an allyl group, an acryloyl group, and a methacryloyl group, and the vinyl group is preferably used.

As the polymerizable monomer, for example, at least one selected from the group consisting of a vinyl compound having one vinyl group, a divinyl compound having two vinyl groups, an allyl compound having one allyl group, a diallyl compound having two allyl groups, and a diene is used. The polymerizable monomer preferably has two polymerizable groups and is more preferably a divinyl compound.

Specific examples of the polymerizable monomer include divinylbenzene, divinylbenzene derivatives, divinylsulfone, butadiene, chloroprene, divinylphenyl, trivinylbenzene, divinylnaphthalene, allylamine, diallylamine, divinylpyridine, styrene, acrylonitrile, methylstyrene, acrolein, methyl vinyl ketone, vinylbiphenyl, diallyl isocyanurate, 1,2-bis(4-vinylphenyl)ethane, trivinylbenzene, 1,6-bis(4-vinylbenzyloxy)hexane, and N,N-dimethyl-N-(4-vinylbenzyl)-4-(4-vinylphenyl)butan-1-ammonium chloride.

The radically polymerizable monomer is preferably a styrene derivative, and in particular, it is preferable to use at least one compound selected from the group consisting of divinylbenzene, 1,2-bis(4-vinylphenyl)ethane, trivinylbenzene, 1,6-bis(4-vinylbenzyloxy)hexane, and N,N-dimethyl-N-(4-vinylbenzyl)-4-(4-vinylphenyl)butane-1 ammonium chloride.

The proportion (content) of the polymerizable monomer in the polymerizable composition is, for example, 0.1 mass% or more and 50 mass% or less, preferably 1 mass% or more and 50 mass% or less, more preferably 1 mass% or more and 20 mass% or less, and particularly preferably 2 mass% or more and 10 mass% or less. When this proportion is high, the durability of the cured product tends to increase. When this proportion is too high, the performance of the ion-exchange resin can be reduced. This proportion can be measured by, for example, subtracting the weight of the polymerizable composition remaining unreacted after the polymerization reaction from the total mass of the polymerizable composition used as a raw material.

A value of a ratio (M3/M4) of the mass M3 of the quaternary ammonium salt to the mass M4 of the polymerizable monomer is, for example, 1 or more and 100 or less, preferably 3 or more and 50 or less, and more preferably 5 or more and 25 or less. When this ratio is high, the performance of the ion-exchange resin tends to increase. When this ratio is low, the durability of the cured product tends to increase.

The linear or branched alkylene glycol having carbon number of 1 or more and 4 or less can also function as an organic solvent. The carbon number of the alkylene glycol is preferably 1 or more and 3 or less, and more preferably 2.

The boiling point of the alkylene glycol is preferably 110°C or more, and more preferably 120°C or more. There is no particular upper limit to this boiling point, but as one example, the boiling point is 300°C or less.

The flash point of the alkylene glycol is preferably 90°C or more, and more preferably 110°C or more. There is no particular lower limit to this flash point, but as one example, the flash point is 200°C or more.

Specific examples of the alkylene glycol include methylene glycol, ethylene glycol, propylene glycol, trimethylene glycol, 1,3-butylene glycol, and tetramethylene glycol. As the alkylene glycol, ethylene glycol is preferably used.

In the polymerizable composition, the proportion (content) of the alkylene glycol is, for example, 1 mass% or more

and 50 mass% or less, preferably 5 mass% or more and 40 mass% or less, and more preferably 10 mass% or more and 35 mass% or less. When this proportion is high, the compatibility of the polymerizable composition tends to increase. When this proportion is too high, the performance of the ion-exchange resin can be reduced. This proportion can be measured by, for example, subtracting the weight of the polymerizable composition remaining unreacted after the polymerization reaction from the total mass of the polymerizable composition used as a raw material.

A value of a ratio (M3/M2) of the mass M3 of the quaternary ammonium salt to the mass M2 of the alkylene glycol is, for example, 0.01 or more and 95 or less, preferably 1 or more and 50 or less, and more preferably 1.8 or more and 10 or less. When this ratio is high, the performance of the ion-exchange resin tends to increase. When this ratio is low, the compatibility of the polymerizable composition tends to increase.

A value of a ratio (M4/M2) of the mass M4 of the polymerizable monomer and the mass M2 of the alkylene glycol is, for example, 0.02 or more and 1 or less, preferably 0.05 or more and 0.5 or less, and more preferably 0.10 or more and 0.25 or less. When this ratio is high, the durability of the cured product tends to increase. When this ratio is low, the compatibility of the polymerizable composition tends to increase.

The hydroxy group-containing compound can function as a stabilizer that suppresses separation of the polymerizable composition. The hydroxy group-containing compound can also function as a surfactant. That is, the polymerizable composition including the hydroxy group-containing compound can have excellent wettability. Therefore, for example, since the polymerizable composition can be quickly impregnated into a porous substrate, the production efficiency of the ion-exchange membrane can be increased.

The hydroxy group-containing compound can be in a liquid state or in a solid state under normal temperature and normal pressure and is preferably in the liquid state.

The boiling point of the hydroxy group-containing compound is preferably 90°C or more, and more preferably 100°C or more. There is no particular upper limit to this boiling point, but as one example, the boiling point is 300°C or less.

The flash point of the hydroxy group-containing compound is preferably 30°C or more, preferably 50°C or more, and more preferably 60°C or more. There is no particular upper limit to this flash point, but as one example, the flash point is 200°C or less.

The hydroxy group-containing compound can be miscible with water or immiscible with water. The solubility of the hydroxy group-containing compound in water at 20°C is, for example, 0.01 g/L or more and 100 g/L or less, preferably 0.1 g or more and 50 g/L or less, and more preferably 0.1 g or more and 30 g/L or less.

The molar mass of the hydroxy group-containing compound is, for example, 70 g/mol or more and 300 g/mol or less, and preferably 80 g/mol or more and 200 g/mol or less.

The hydroxy group-containing compound includes at least one selected from the group consisting of a primary alcohol having carbon number of 4 or more and 15 or less, a secondary alcohol having carbon number of 4 or more and 15 or less, and a diol having carbon number of 5 or more and 15 or less, the diol having a hydroxy group bonded to a secondary carbon atom.

The carbon number of the primary alcohol is preferably 5 or more and 13 or less, and more preferably 6 or more and 11 or less. The primary alcohol can be an aliphatic alcohol, an alicyclic alcohol, or an aromatic alcohol, and is preferably an aliphatic alcohol. The primary alcohol can be a linear alcohol or a branched alcohol and is preferably the linear alcohol.

The primary alcohol preferably includes at least one selected from the group consisting of 1-butanol, 1-pentanol, 1-hexanol, 1-heptanol, 1-octanol, 1-nonanol, 1-decanol, isodecanol, tridecanol, 1-undecanol, and 1-dodecanol.

The primary alcohol more preferably includes at least one selected from the group consisting of 1-hexanol, 1-heptanol, 1-octanol, 1-nonanol, 1-decanol, isodecanol, tridecanol, and 1-undecanol. These compounds tend to exhibit a high effect as surfactants. The particularly preferable primary alcohol is at least one selected from the group consisting of 1-octanol, 1-nonanol, and 1-decanol.

The carbon number of the secondary alcohol is preferably 5 or more and 13 or less, and more preferably 7 or more and 12 or less. The secondary alcohol can be an aliphatic alcohol, an alicyclic alcohol, or an aromatic alcohol, and is preferably the aliphatic alcohol. The secondary alcohol can be a linear alcohol or a branched alcohol and is preferably the linear alcohol.

The secondary alcohol preferably includes at least one selected from the group consisting of 2-butanol, 3-pentanol, 3-hexanol, 3-heptanol, 2-undecanol, 2-dodecanol, cyclopentanol, cyclohexanol, and cyclooctanol.

The secondary alcohol more preferably includes at least one selected from the group consisting of at least one selected from the group consisting of 3-heptanol, 2-undecanol, and 2-dodecanol. These compounds tend to exhibit a high effect as surfactants.

The carbon number of the diol is preferably 5 or more and 12 or less, and more preferably 6 or more and 10 or less. The diol can be an aliphatic diol, an alicyclic diol, or an aromatic diol, and is preferably the aliphatic diol. The diol can be a linear diol or a branched diol and is preferably the branched diol.

The diol preferably includes at least one selected from the group consisting of 1,2-hexanediol, 1,2-octanediol, and 1,2-decanediol, and more preferably includes 1,2-decanediol.

The hydroxy group-containing compound preferably includes at least one compound selected from the group

consisting of a primary aliphatic alcohol having carbon number of 4 or more and 15 or less, a secondary aliphatic alcohol having carbon number of 4 or more and 15 or less, and an aliphatic diol having carbon number of 5 or more and 15 or less, the aliphatic diol having a hydroxy group bonded to a secondary carbon atom.

Also, the hydroxy group-containing compound more preferably includes at least one compound selected from the group consisting of 1-hexanol, 1-heptanol, 1-octanol, 1-nonanol, 1-decanol, isodecanol, tridecanol, 1-undecanol, 1-dodecanol, 3-heptanol, 2-undecanol, 2-dodecanol, and 1,2-decanediol.

The proportion (content) of the hydroxy group-containing compound in the polymerizable composition is, for example, 1 mass% or more and 10 mass% or less, preferably 1 mass% or more and 5 mass% or less, and more preferably 1 mass% or more and 3 mass% or less. When this proportion is high, the compatibility of the polymerizable composition tends to increase. When this proportion is too high, the performance of the ion-exchange resin can be reduced. This proportion can be measured by, for example, subtracting the weight of the polymerizable composition remaining unreacted after the polymerization reaction from the total mass of the polymerizable composition used as a raw material.

In the polymerizable composition, the amount of the hydroxy group-containing compound can be, for example, 0.01 molar equivalents or more and 0.5 molar equivalents or less with respect to the quaternary ammonium salt. This amount is preferably 0.03 molar equivalents or more and 0.25 molar equivalents or less, and more preferably 0.03 molar equivalents or more and 0.15 molar equivalents or less.

A value of a ratio (M3/M1) of the mass M3 of the quaternary ammonium salt to the mass M1 of the hydroxy group-containing compound is, for example, 5 or more and 95 or less, preferably 15 or more and 70 or less, and more preferably 25 or more and 50 or less. When this ratio is high, the performance of the ion-exchange resin tends to increase. When this ratio is low, the compatibility of the polymerizable composition tends to increase.

A value of a ratio (M4/M1) of the mass M4 of the polymerizable monomer to the mass M1 of the hydroxy group-containing compound is, for example, 0.01 or more and 50 or less, preferably 0.25 or more and 25 or less, and more preferably 1 or more and 10 or less. When this ratio is high, the durability of the cured product tends to increase. When this ratio is low, the compatibility of the polymerizable composition tends to increase.

A value of a ratio (M1/M2) of the mass M1 of the hydroxy group-containing compound to the mass M2 of the alkylene glycol is, for example, 0.02 or more and 10 or less, preferably 0.02 or more and 3 or less, and more preferably 0.03 or more and 0.3 or less. When the ratio is within this range, the compatibility of the polymerizable composition tends to increase.

The polymerizable composition can contain a polymerization initiator, an organic solvent, and other additives, in addition to the components described above.

As the polymerization initiator, at least one of a thermal polymerization initiator and a photopolymerization initiator is used. Examples of the thermal polymerization initiator include benzoyl peroxide, p-chlorobenzoyl peroxide, decanoyl peroxide, lauroyl peroxide, acetyl peroxide, tert-butyl (2-ethylhexanoyl)peroxide hexanoate, and tert-butyl peroxyoctoate. Examples of the photopolymerization initiator include 1-phenyl-2-hydroxy-2-methylpropan-1-one, 1-hydroxycyclohexyl phenyl ketone, 1-(4-isopropylphenyl)-2-hydroxy-2-methylpropan-1-one, phenylbis(2,4,6-trimethylbenzoyl)phosphine oxide, 2-benzyl-2-(N,N-dimethylamino)-1-(4-morpholinophenyl)butan-1-one, 2-methyl-1-[4-(methylthio)phenyl]-2-2 morpholinopropan-1-one, and the like.

The polymerizable composition preferably contains at least one compound selected from the group consisting of the thermal polymerization initiator and the photopolymerization initiator described above.

The proportion (content) of the polymerization initiator in the polymerizable composition is, for example, 0.1 mass% or more and 10 mass% or less, and preferably 1 mass% or more and 5 mass% or less. This proportion can be measured by, for example, subtracting the weight of the polymerizable composition remaining unreacted after the polymerization reaction from the total mass of the polymerizable composition used as a raw material.

Examples of the organic solvent other than the alkylene glycol and the hydroxy group-containing compound include at least one selected from the group consisting of dialkylene glycol, dimethyl sulfoxide (DMSO), N,N'-dimethylpropyleneurea (DMPU), 1-methyl-2-pyrrolidone, N-methyl-2-piperidone, 1,3-dimethyl-2-imidazolidinone, N,N-dimethylacetamide, N,N-diethylformamide, N,N-diethylacetamide, and tetramethylurea.

The used amount of the organic solvent other than the alkylene glycol and the hydroxy group-containing compound is not particularly limited, and is, for example, from 0 to 10 parts by mass with respect to 100 parts by mass of the quaternary ammonium salt.

Regarding the polymerizable composition, the content of the alcohol having carbon number of 1 or more and 3 or less is preferably small in the polymerizable composition. Specifically, the content of at least one selected from the group consisting of methanol, ethanol, 1-propanol, isopropanol, dialkylene glycol, and a trihydric alcohol is preferably small. When these compounds are contained, the compatibility of the polymerizable composition can be lowered. The content of these compounds is preferably 5 mass% or less, more preferably 1 mass% or less, and still more preferably 0.1 mass% or less, and it is particularly preferable that these compounds are not contained. The lower limit of the content of these compounds is, for example, 0 mass%, and as another example, 100 ppm or more. This proportion can be measured by, for example, nuclear magnetic resonance (NMR) or liquid chromatography.

The polymerizable composition preferably does not contain water. When the polymerizable composition contains water, a component forming the composition such as the polymerizable monomer and the polymerization initiator can precipitate. The concentration (content) of water in the polymerizable composition is preferably 10 mass% or less, more preferably 5 mass% or less, and still more preferably 1 mass% or less. The lower limit of the concentration of water is 0 mass% as one example and 100 ppm as another example. This concentration can be measured by, for example, Karl Fischer moisture content measurement or gas chromatography.

As other additives, known additives such as an antioxidant, a polymerization inhibitor, a plasticizer, and a surfactant can be used.

Examples of the polymerization inhibitor include at least one selected from the group consisting of 4-hydroxy-2,2,6,6-tetramethylpiperidin-1-oxyl (4-OH-TEMPO), 4-tert-butylcatechol (TBC), cupferron, and benzoquinone.

The proportion (content) of the polymerization inhibitor in the polymerizable composition is, for example, 0.0001 mass% or more and 2 mass% or less, preferably 0.001 mass% or more and 1.0 mass% or less, and more preferably 0.005 mass% or more and 0.1 mass% or less. This proportion can be measured, for example, by gas chromatography.

[Method for Producing Polymerizable Composition]

The polymerizable composition according to the first embodiment can be obtained by, for example, mixing the respective raw materials described above at a desired ratio of amounts under normal temperature and normal pressure. As the compounds of the respective raw materials, commercially available compounds can be used, or the compounds can be synthesized by a known method. The order of mixing the respective raw materials is not particularly limited, and the raw materials can be mixed one by one in any order, or the plurality of raw materials, each being previously mixed with an organic solvent or the like, can be mixed with each other.

[Ion-Exchange Resin]

The ion-exchange resin according to the second embodiment (hereinafter, also simply referred to as the "ion-exchange resin") includes a cured product of the polymerizable composition according to the first embodiment (hereinafter, also simply referred to as a "cured product"). The cured product is obtained by subjecting the polymerizable composition according to the first embodiment to photopolymerization and/or thermal polymerization by a method described later. The ion-exchange resin can be a copolymer of a quaternary ammonium salt and a polymerizable monomer. The ion-exchange resin can be an ion exchanger of an anion of the cured product. The ion exchanger of the anion of the cured product means a resin in which an anion of the quaternary ammonium group of the cured product is substituted with another anion.

As long as the cured product is obtained by curing the polymerizable composition according to the first embodiment, a cured product obtained by removing an unreacted component, the solvent, and the like after the cure also corresponds to the cured product according to the present embodiment.

The ion-exchange resin can be advantageously used as an anion-exchange resin.

The ion-exchange resin contains a quaternary ammonium group as an ion-exchange group. The anion of the quaternary ammonium group is, for example, a halide ion, triflate, bistrifluoromethanesulfonimide, a hydroxide ion, a carbonate ion, or a bicarbonate ion. The counter ion is preferably a hydroxide ion, a carbonate ion, a bicarbonate ion, or a halide ion. The ion-exchange resin having these ions is advantageous as an anion-exchange resin.

The weight average molecular weight of the ion-exchange resin is, for example, 1,000 or more and 1,000,000 or less, and preferably 5,000 or more and 500,000 or less. The weight average molecular weight of the ion-exchange resin can be measured by, for example, gel permeation chromatography or an intrinsic viscosity method.

The ion-exchange resin has, for example, a structure in which a plurality of side chains containing a quaternary ammonium group are bonded to a main chain consisting of a hydrocarbon. A plurality of main chains can be bonded via a crosslinking agent which is a radically polymerizable monomer.

The ion-exchange resin according to the embodiment has, for example, a structure represented by the following Formula (IV). The ion-exchange resin having the structure represented by Formula (IV) is obtained by curing a polymerizable composition containing divinylbenzene as the radically polymerizable monomer.

[Chem 3]

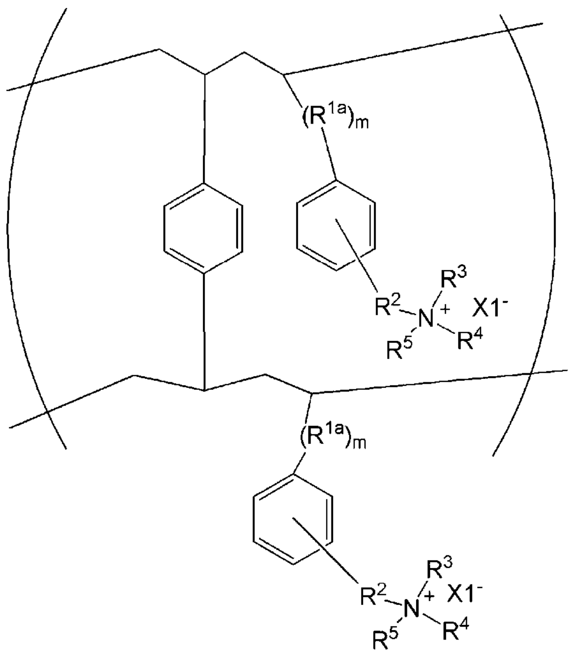

(IV)

In Formula (IV), $R^{1a}$ represents an alkylene group having carbon number of 1 or more and 4 or less. $R^2$, $R^3$, $R^4$, and $R^5$ are each independently as defined in Formula (I). $X1^-$ is a halide ion, triflate, bistrifluoromethanesulfonimide, a hydroxide ion, a carbonate ion, a bicarbonate ion, or tetrafluoroborate. $X1^-$ is preferably the hydroxide ion, the carbonate ion, or the bicarbonate ion. m is an integer of 1 to 10, preferably an integer of 1 to 4.

[Method for Producing Ion-Exchange Resin]

The ion-exchange resin is obtained by, for example, thermally polymerizing or photopolymerizing the polymerizable composition according to the embodiment.

The method of the photopolymerization (photoirradiation) is not particularly limited, but the irradiation wavelength of ultraviolet rays is, for example, 300 to 400 nm, and preferably 330 to 380 nm. The ultraviolet irradiation intensity is, for example, 10 to 5000 $mW/cm^2$, and preferably 50 to 3000 $mw/cm^2$. The irradiation time is, for example, 0.5 seconds or more and 3 hours or less, and preferably 2 seconds or more and 1 hour or less.

As the irradiation source, for example, an ultraviolet light-emitting diode (LED), a halogen lamp, a xenon lamp, a tungsten lamp, a mercury lamp, or the like can be used. From the viewpoint of ease of controlling the irradiation wavelength and difficulty in heat generation, it is preferable to use the LED.

The method of the thermal polymerization (heat treatment) is not particularly limited, but the heating temperature is, for example, 50 to 150°C, and preferably 80 to 130°C. The heating time is, for example, 1 minute or more and 3 hours or less, and preferably 3 minutes or more and 1 hour or less. As a heating method, a hot plate, an oven, an infrared heater, a heating furnace, or the like can be used.

After a part of the polymerizable composition is polymerized by ultraviolet irradiation, the polymerizable composition can be completely polymerized by the thermal polymerization. The ultraviolet irradiation can be omitted, and only the heat treatment can be performed. The ultraviolet irradiation can also be performed after the heat treatment.

The ion-exchange resin obtained after the photoirradiation, the heating, or the light irradiation and the heating can be washed with water, an organic solvent (ethanol, acetone, chloroform, dichloromethane, etc.), or a mixed solvent thereof to wash off ethylene glycol or the like contained in the polymerizable composition. When water is used, an anion substitution treatment described below can be performed together.

The ion-exchange resin obtained by the above method can be subjected to a drying treatment. In the drying treatment, the drying temperature is, for example, 40°C or more and 90°C or less, and the drying time is, for example, 3 hours or more and 24 hours or less.

The ion-exchange resin obtained by the above method can be subjected to an anion substitution treatment. This makes it possible to substitute the anion of the quaternary ammonium group of the ion-exchange resin with another type of anion. When the anion of the quaternary ammonium group is triflate or bistrifluoromethanesulfonimide, the anion can be substituted with a halide ion by immersing the ion-exchange resin in a halogen compound-containing aqueous solution

such as a hydrogen chloride solution or a hydrogen bromide solution for a certain period of time. When the anion of the quaternary ammonium group is the halide ion, the anion can be substituted with a hydroxide ion by immersing the ion-exchange resin in an alkali metal hydroxide solution such as a sodium hydroxide solution for a certain period of time. When the anion of the quaternary ammonium group is the hydroxide ion, the anion can be substituted with a carbonate ion or a bicarbonate ion by immersing the ion-exchange resin in a carbonate solution such as a potassium carbonate solution or a sodium bicarbonate solution for a certain period of time. Alternatively, the anion can be substituted with a carbonate ion or a bicarbonate ion by exposing the ion-exchange resin having the hydroxide ion as the anion of the quaternary ammonium group to the air for a certain period of time.

[Ion-Exchange Membrane]

An ion-exchange membrane according to a third embodiment (hereinafter, also simply referred to as an "ion-exchange membrane") includes the ion-exchange resin according to the second embodiment and a substrate. The ion-exchange resin can be supported on the substrate. The ion-exchange membrane according to the embodiment can be advantageously used as an anion-exchange membrane (AEM).

The ion-exchange membrane can be used in a hydrogen production device, a water electrolysis device, a fuel cell, an electrodialysis device, a diffusion dialysis device, a pure water production device, an ion-exchange water production device, and the like. The ion-exchange membrane can be advantageously used as an anion-exchange membrane for an AEM hydrogen production device, an AEM water electrolysis device, or the fuel cell.

The thickness of the ion-exchange membrane is, for example, 1 μm or more and 500 μm or less. When a thick ion-exchange membrane is used, the membrane resistance tends to increase. When a thin ion-exchange membrane is used, the membrane resistance tends to decrease. The thickness of the ion-exchange membrane is preferably 10 μm or more and 200 μm or less, and more preferably 20 μm or more and 100 μm or less. A method of measuring the thickness of the ion-exchange membrane will be described later in Examples.

The ion-exchange capacity (IEC) of the ion-exchange membrane is, for example, 1.0 mmol/g or more, and as another example, 2.0 mmol/g or more, and as still another example, 2.5 mmol/g or more. Since the ion-exchange membrane can use a polymerizable composition having a high concentration of the quaternary ammonium salt, a high ion-exchange capacity can be realized. There is no particular upper limit to the ion-exchange capacity, but the ion-exchange capacity is 4.0 mmol/g or less as one example and 3.0 mmol/g or less as another example. The method of measuring the ion-exchange capacity will be described later in Examples.

A value of a ratio of the IEC to the thickness (IEC/membrane thickness) of the ion-exchange membrane is preferably from 0.04 to 0.10, and more preferably from 0.06 to 0.10. When the value of the ratio is within the above range, the performance as the ion-exchange membrane is excellent.

The membrane resistance of the ion-exchange membrane is, for example, 2.0 $\Omega \cdot cm^2$ or less, and as another example, 1.0 $\Omega \cdot cm^2$ or less. The lower limit of the membrane resistance is not particularly limited, but is 0.1 $\Omega \cdot cm^2$ or more as one example and 0.2 $\Omega \cdot cm^2$ or more as another example. The method of measuring the membrane resistance will be described later in Examples.

The water content of the ion-exchange membrane is, for example, 20% or more, and as another example, 30% or more, and as still another example, 40% or more. When the water content of the ion-exchange membrane is high, the ion conductivity of water tends to increase, and it is considered that the conductivity is improved. From the viewpoint of increasing the mechanical strength of the membrane, the water content of the ion-exchange membrane is preferably 120% or less, and more preferably 100% or less. The method of measuring the water content will be described later in Examples.

The substrate functions as a support for the ion-exchange resin. The substrate is preferably a porous membrane. As the substrate, for example, a porous film, a woven fabric, a nonwoven fabric, a sponge, or a film can be used. When the porous membrane is used as the substrate, the pores of the substrate are preferably filled with the ion-exchange resin.

The substrate is, for example, a polyolefin resin, a fluorine-based resin, polyacrylonitrile, polyvinyl chloride, polyester, polyamide, polysulfone, polyether sulfone, polyphenylene sulfone, polyphenylene sulfide, polyimide, polyetherimide, polyamide imide, polycarbonate, polyacrylate, cellulose acetate, polyether ether ketone, or a copolymer thereof. The polyolefin resin includes polyethylene, polypropylene, polybutadiene, polymethylpentene, polybutene, polypentene, polyhexene, polymethylheptene, and copolymers thereof. The fluorine-based resin includes polytetrafluoroethylene, poly(tetrafluoroethylene-hexafluoropropylene), polyvinylidene fluoride, polyhexafluoropropylene, polychlorotrifluoroethylene, and copolymers thereof. The substrate preferably contains the polyolefin resin, and more preferably contains at least one of polyethylene and polypropylene.

The thickness of the substrate is, for example, 1 μm or more and 500 μm or less, preferably 5 μm or more and 200 μm or less, more preferably 10 μm or more and 150 μm or less, and still more preferably 20 μm or more and 100 μm or less.

The porosity of the substrate is, for example, 25% or more and 60% or less, preferably 30% or more and 50% or less, and more preferably 35% or more and 45% or less.

[Method for Producing Ion-Exchange Membrane]

Examples of a method for producing the ion-exchange membrane include a method including a step of bringing a polymerizable composition into contact with a substrate to yield a first structure; and a step of irradiating the first structure with ultraviolet rays to yield a second structure (photopolymerization step).

In this production method, since the polymerizable composition containing the quaternary ammonium salt is used, a step of introducing an ion-exchange group into the resin obtained by the polymerization can be omitted as compared with a case of using a polymerizable composition consisting of a compound having no ion-exchange group. In addition, since a part or all of the polymerizable composition is polymerized by ultraviolet irradiation, the ion-exchange membrane can be produced in a shorter time than that in a method of thermal polymerization. In addition to the photopolymerization step, a step of the thermal polymerization can be further included.

Hereinafter, details of the production method will be described.

The method of bringing the polymerizable composition into contact with the substrate is not particularly limited. The polymerizable composition can be applied to the substrate, sprayed, or dropped. Alternatively, the substrate can be immersed in the polymerizable composition. The amount of the polymerizable composition per 1 g of the substrate can be, for example, 0.2 g or more and 2.0 g or less. The substrate can be subjected to a surface treatment such as a corona treatment, a glow discharge treatment, or an alkali treatment to increase the adhesiveness to the polymerizable composition.

In the first structure, the polymerizable composition is supported on the substrate. At least one main surface of the substrate of the first structure is preferably covered with a resin film, and both surfaces are more preferably covered with the resin film. By covering the first structure with the resin film, the composition change of the polymerizable composition supported on the first structure can be suppressed. The reason is that when the polymerizable composition contains an organic solvent, the composition of the polymerizable composition can change due to volatilization of the organic solvent. By covering the first structure with the resin film, volatilization of the organic solvent can be suppressed. In addition, by covering the ion-exchange membrane with the resin film, the smoothness of the surface of the ion-exchange membrane is enhanced, and the ion-exchange membrane having uniform thickness can be obtained.

Examples of the resin of the resin film include polyethylene terephthalate, polyester, perfluoroethylene-propene copolymer, and fluorinated ethylene propylene copolymer.

The first structure is irradiated with ultraviolet rays to be photopolymerized, and a second structure in which the polymerizable composition is polymerized can be thus obtained. The obtained second structure can be directly used as the ion-exchange membrane including the cured product of the polymerizable composition. The conditions and the irradiation source of the ultraviolet irradiation are the same as those described in the section of [Method for Producing Ion-Exchange Resin].

As described above, when the polymerizable composition contains the organic solvent, the composition of the polymerizable composition can change due to volatilization of the organic solvent, and it is thus preferable to perform irradiation with the ultraviolet rays immediately after the first structure is obtained. Specifically, the ultraviolet rays are irradiated preferably within 0.5 hours, more preferably within 0.1 hours after the production of the first structure. The organic solvent is volatilized during the ultraviolet irradiation or during the heat treatment described below, and thus does not remain in the ion-exchange membrane.

After the first structure is irradiated with ultraviolet rays to yield the second structure, the second structure can be heat-treated to yield an ion-exchange membrane containing a cured product of the polymerizable composition. That is, after a part of the polymerizable composition is polymerized by the ultraviolet irradiation, the polymerizable composition can be completely polymerized by the thermal polymerization. The conditions and method of the heat treatment are the same as those described in the section of [Method for Producing Ion-Exchange Resin].

The ion-exchange membrane obtained after the photoirradiation, the heating, or the photoirradiation and the heating can be subjected to a washing treatment, a drying treatment, and an anion substitution treatment in the same manner as those in the method described in the section of [Method for Producing Ion-Exchange Resin].

[Membrane Electrode Assembly]

A membrane electrode assembly according to the fourth embodiment (hereinafter, also simply referred to as a "membrane electrode assembly") includes the ion-exchange membrane according to the third embodiment and an electrode. In the membrane electrode assembly (MEA), the ion-exchange membrane and the electrode are integrated. The electrode can include a first electrode that is a cathode and a second electrode that is an anode. In the membrane electrode assembly, the ion-exchange membrane can be interposed between the first electrode and the second electrode.

The membrane electrode assembly can be used for a hydrogen production device, a water electrolysis device, a fuel cell, and the like.

The electrode can include a metal catalyst, and optionally, an ion conducting agent, a conductive agent, and a

binder. The proportions (contents) of the metal catalyst, the ion conducting agent, the conductive agent, and the binder in the electrode can be, for example, 50 mass% or more and 99 mass% or less, 0.1 mass% or more and 30 mass% or less, 0.1 mass% or more and 30 mass% or less, and 0.1 mass% or more and 30 mass% or less, respectively.

The metal catalyst promotes an oxidation reaction or a reduction reaction. The metal catalyst is typically in a particulate form. Examples of the metal catalyst include platinum, gold, silver, palladium, iridium, rhodium, ruthenium, tin, iron, cobalt, nickel, manganese, molybdenum, tungsten, vanadium, chromium, tantalum, zirconium, aluminum, zinc, oxides or hydroxides thereof, or an alloy thereof. The metal catalyst for the anode preferably includes nickel. The metal catalyst for the cathode preferably includes platinum, gold, silver, palladium, iridium, rhodium, ruthenium, tin, iron, cobalt, nickel, manganese, or an alloy thereof.

The ion conducting agent increases the ion conductivity of the electrode. Examples of the ion conducting agent include a perfluorocarbon polymer, aromatic polyether ether ketone, polysulfone, polyfluorene, and polystyrene, which have a basic functional group. As the ion conducting agent, an ion-exchange resin can be used. As the ion-exchange resin used as the ion conducting agent, the ion-exchange resin according to the second embodiment can be used, or another ion-exchange resin can be used. Examples of the other ion-exchange resin include an ion-exchange resin having an imidazole group.

The conductive agent increases the electron conductivity of the electrode. The conductive agent can be used as a carrier of the metal catalyst. Examples of the conductive agent include carbon black, activated carbon, graphite, fullerene, carbon nanotubes, and mixtures thereof.

The binder increases the rigidity of the electrode. As the binder, polytetrafluoroethylene (PTFE), polyvinylidene fluoride (PVdF), a fluorine-based rubber, a polyacrylic acid compound, an imide compound, or a mixture thereof can be used.

The membrane electrode assembly is produced, for example, by the following method.

First, an ion-exchange membrane is prepared by the above-described method. The ion-exchange membrane can be in a wet state, but is preferably in a dry state.

Next, a metal catalyst and optionally an ion conducting agent, a conductive agent, a binder, and an organic solvent are mixed to prepare a first electrode forming composition. The first electrode forming composition is applied to, for example, a release paper to yield a first coating film. The first coating film is dried. The first coating film after the drying is peeled off from the release paper and laminated on one main surface of the ion-exchange membrane. An ion conducting agent can be applied to one main surface of the ion-exchange membrane. The first electrode forming composition can be directly applied to one main surface of the ion-exchange membrane to form the first coating film.

Next, a metal catalyst and optionally an ion conducting agent, a conductive agent, a binder, and an organic solvent are mixed to prepare a second electrode forming composition. The second electrode forming composition is applied to, for example, a release paper to yield a second coating film. The second coating film is dried. The second coating film after the drying is peeled off from the release paper and laminated on the other main surface of the ion-exchange membrane. An ion conducting agent can be applied to the other main surface of the ion-exchange membrane. The first electrode forming composition can be directly applied to the other main surface of the ion-exchange membrane to form the second coating film. The first coating film can be formed after the second coating film is formed.

The film thickness of the first coating film and the second coating film can be, for example, from 1 μm to 50 μm, and is preferably from 5 μm to 30 μm.

The first coating film and the second coating film are integrated with the ion-exchange membrane by heating, pressing, or both of the heating and pressing on the obtained laminate. In this manner, a membrane electrode assembly in which the first electrode, the ion-exchange membrane, and the second electrode are laminated in this order is obtained. The first electrode or the second electrode can be omitted.

The heating conditions include, for example, 50 to 80°C and 10 to 120 minutes.

[Hydrogen Production Device]

A hydrogen production device according to a fifth embodiment (hereinafter, also simply referred to as a "hydrogen production device") includes the ion-exchange membrane according to the third embodiment. The hydrogen production device can include the membrane electrode assembly according to the fourth embodiment.

The hydrogen production device includes the ion-exchange membrane according to the embodiment, and thus can efficiently decompose water.

Hereinafter, the hydrogen production device including the membrane electrode assembly will be described in detail with reference to Fig. 1.

Fig. 1 is a cross-sectional view schematically showing an example of a hydrogen production device. A hydrogen production device 1 shown in Fig. 1 includes a membrane electrode assembly 4, and a first electrode chamber 2 and a second electrode chamber 3 separated by the membrane electrode assembly 4.

The membrane electrode assembly 4 includes an anion-exchange membrane 5, a first electrode 6 supported on

one main surface of the anion-exchange membrane 5, and a second electrode 7 supported on the other main surface of the anion-exchange membrane. The first electrode 6 and the second electrode 7 are connected to a power supply via a conductive wire (not shown). A gas diffusion layer can be provided on the surface of the first electrode 6 and the second electrode 7. As the gas diffusion layer, for example, carbon paper, carbon cloth, nickel foam, titanium foam, or porous graphite can be used.

The first electrode chamber 2 is provided with the first electrode 6 and is connected to a hydrogen discharge pipe 8. The hydrogen discharge pipe 8 is connected to a hydrogen tank (not shown). The first electrode chamber 2 can be provided with a first partition wall (not shown). The first partition wall is preferably provided with a plurality of grooves connected to the first electrode chamber 2 and a hydrogen discharge path connected to these grooves and the hydrogen discharge pipe 8. The first partition wall is preferably formed of an electron conductive material. For example, a metal plate can be used as the first partition wall. The first partition wall can be in contact with the gas diffusion layer described above.

The second electrode chamber 3 is provided with the second electrode 7, and an oxygen discharge pipe 9 and a water supply pipe 10 are connected to the second electrode chamber 3. The oxygen discharge pipe 9 is connected to an oxygen tank (not shown). The water supply pipe 10 is connected to a water supply device (not shown). The second electrode chamber 3 can be provided with a second partition wall (not shown). The second partition wall is preferably provided with a plurality of grooves connected to the second electrode chamber 3, and an oxygen discharge path connected to these grooves, the oxygen discharge pipe 9 and the water supply pipe 10. The second partition wall is preferably formed of an electron conductive material. For example, a metal plate can be used as the second partition wall. The second partition wall can be in contact with the gas diffusion layer described above.

Next, a hydrogen production method using the hydrogen production device will be described in detail with reference to Fig. 1.

First, liquid to be treated is supplied to the second electrode chamber 3 through the water supply pipe 10. The liquid to be treated can be water or an alkaline aqueous solution. The alkaline aqueous solution is, for example, an aqueous solution of a hydroxide, a carbonate, or a bicarbonate of an alkali metal. The pH of the alkaline aqueous solution at 20°C is, for example, 10 or more and 14 or less. The concentration of the alkaline aqueous solution is, for example, 0.1 mass% or more and 30 mass% or less.

The liquid to be treated in contact with the membrane electrode assembly 4 is held by the anion-exchange membrane 5. The liquid to be treated is supplied to the first electrode chamber 2 through the anion-exchange membrane 5.

Next, power is supplied from the power source (not shown) to the first electrode 6 and the second electrode 7. Thus, in the first electrode 6, water ($H_2O$) is decomposed to generate hydrogen ($H_2$) and hydroxide ions ($OH^-$) as shown in the following Formula (A). The generated hydroxide ions are supplied to the second electrode 7 through the anion-exchange membrane 5. The supplied hydroxide ions are decomposed and synthesized into oxygen $O_2$ and water ($H_2O$) at the second electrode 7 as shown in the following Formula (B).

$$2H_2O + 2e^- \rightarrow H_2 + 2OH^- \quad (A)$$

$$2OH^- \rightarrow 1/2O_2 + H_2O + 2e^- \quad (B)$$

The hydrogen gas generated in the first electrode chamber 2 is supplied to the hydrogen tank via the hydrogen discharge pipe 8. The oxygen gas generated in the second electrode chamber 3 is supplied to the oxygen tank via the oxygen discharge pipe 9.

## Examples

Hereinafter, the present invention will be described in detail with reference to Examples, but the present invention is not limited to these Examples.

### <Preparation of Polymerizable Composition>

(Example 1)

A polymerizable composition was obtained by mixing 6 g of vinylbenzyltrimethylammonium chloride, 0.37 g of a polymerizable monomer, 3.15 g of an organic solvent, 0.1 equivalents of a hydroxy group-containing compound, 0.09 g of a photopolymerization initiator, 0.05 g of a thermal polymerization initiator, and 0.0015 g of a polymerization inhibitor under normal temperature and normal pressure. As the polymerizable monomer, divinylbenzene was used. As the organic solvent, ethylene glycol was used. As the hydroxy group-containing compound, 0.21 g of 1-butanol was used. As the photopolymerization initiator, 1-phenyl-2-hydroxy-2-methylpropan-1-one was used. As the thermal polymerization initiator, tert-butyl peroxyoctoate was used. As the polymerization inhibitor, 4-hydroxy-2,2,6,6-tetramethylpiperidin-1-oxyl

was used.

(Examples 2 to 23 and Comparative Examples 1 to 16)

A plurality of polymerizable compositions were prepared in the same manner as that in Example 1 except that each of the hydroxy group-containing compounds or general-purpose solvents shown in Tables 1 and 2 was used instead of 1-butanol used as the hydroxy group-containing compound in Example 1.

<Evaluation Test>

(Phase Separation)

The polymerizable compositions obtained in Examples and Comparative Examples were visually observed for phase separation. Specifically, 10 g of each of the polymerizable compositions in a screw tube was stirred for 300 seconds, and after standing the screw tube for 10 minutes, the polymerizable composition whose phase separation was visually confirmed was determined as "Confirmed", and the polymerizable composition whose phase separation was not confirmed was determined as "None".

(Impregnation)

The impregnation of the polymerizable compositions obtained in Examples and Comparative Examples was confirmed. Specifically, when a porous substrate was immersed in each of the polymerizable compositions, the presence or absence of impregnation into the porous substrate was visually confirmed, and the porous substrate impregnated within 60 seconds was regarded as "Confirmed", and the porous substrate not impregnated was regarded as "None". The porous substrate used was a porous substrate made of polyethylene having a thickness of 25 μm, a porosity of 40 ± 5%, and an average pore size of 90 nm.

[Table 1]

Table 1

| | Hydroxy group-containing compound | | | Evaluation Results | |
|---|---|---|---|---|---|
| | Type | Boiling point (°C) | Flash point (°C) | Phase Separation | Impregnation |
| Comparative Example 1 | None | - | - | Confirmed | None |
| Comparative Example 2 | MeOH | 65 | 11 | Confirmed | None |
| Comparative Example 3 | 1-Propanol | 97 | 25 | Confirmed | None |
| Example 1 | 1-Butanol | 118 | 37 | None | None |
| Example 2 | 1-Pentanol | 137 | 43 | None | None |
| Example 3 | 1-Hexanol | 157 | 63 | None | Confirmed |
| Example 4 | 1-Heptanol | 177 | 71 | None | Confirmed |
| Example 5 | 1-Octanol | 194 | 83 | None | Confirmed |
| Example 6 | 1-Nonanol | 214 | 104 | None | Confirmed |
| Example 7 | 1-Decanol | 233 | 117 | None | Confirmed |
| Example 8 | Isodecanol | 211 | 104 | None | Confirmed |
| Example 9 | Tridecanol | 254 | 130 | None | Confirmed |
| Example 10 | 1-Undecanol | 147/25 mmHg | 127 | None | Confirmed |

(continued)

| | Hydroxy group-containing compound | | | Evaluation Results | |
|---|---|---|---|---|---|
| | Type | Boiling point (°C) | Flash point (°C) | Phase Separation | Impregnation |
| Example 11 | 1-Dodecanol (solid) | 262 | - | None | Confirmed |
| Example 12 | 2-Butanol | 100 | 24 | None | None |
| Example 13 | 3-Pentanol | 116 | 34 | None | None |
| Example 14 | 3-Hexanol | 135 | 45 | None | None |
| Example 15 | 3-Heptanol | 156 | 60 | None | Confirmed |
| Example 16 | 2-Undecanol | 228 | 113 | None | Confirmed |
| Example 17 | 2-Dodecanol | 129/12 mmHg | 113 | None | Confirmed |
| Example 18 | Cyclopentanol | 140 | 47 | None | None |
| Example 19 | Cyclohexanol | 161 | 63 | None | None |
| Example 20 | Cyclooctanol | 108/22 mmHg | 88 | None | None |
| Comparative Example 4 | Diethylene glycol | 244.8 | 143 | Confirmed | None |
| Example 21 | 1,2-Hexanediol | 118/12.8 mmHg | 122 | None | None |
| Comparative Example 5 | 1,8-Octanediol (solid) | 172/ 22 mmHg | 148 | Confirmed (not dissolved) | None |
| Example 22 | 1,2-Octanediol (solid) | 267 | - | None | None |
| Example 23 | 1,2-Decanediol (solid) | 255 | 113 | None | Confirmed |
| Comparative Example 6 | Glycerol | 290 | 160 | Confirmed | None |

[Table 2]

Table 2

| | General purpose solvent | | | Evaluation Results | |
|---|---|---|---|---|---|
| | Type | Boiling point (°C) | Flash point (°C) | Phase Separation | Impregnation |
| Comparative Example 7 | Dimethyl sulfoxide | 189 | 95 | Confirmed | None |
| Comparative Example 8 | N,N-dimethylformamide | 153 | 57 | Confirmed | None |
| Comparative Example 9 | Tetrahydrofuran | 66 | -17 | Confirmed | None |
| Comparative Example 10 | Acetonitrile | 82 | 5 | Confirmed | None |
| Comparative Example 11 | Chloroform | 61 | - | Confirmed | None |
| Comparative Example 12 | Diethylene glycol ethyl methyl ether | 179 | 54 | Confirmed | None |

(continued)

| | General purpose solvent | | | Evaluation Results | |
|---|---|---|---|---|---|
| | Type | Boiling point (°C) | Flash point (°C) | Phase Separation | Impregnation |
| Comparative Example 13 | Formamide | 210 | 154 | Confirmed | None |
| Comparative Example 14 | Ethylene glycol | 244.8 | 143 | Confirmed | None |
| Comparative Example 15 | 2-Aminoethanol | 171 | 93 | Confirmed | None |
| Comparative Example 16 | Triethanolamine | 360 | 185 | Confirmed | None |

<Production of Ion-Exchange Membrane>

(Example 24)

First, a substrate was prepared. As the substrate, a polyethylene film having a thickness of 25 μm and a porosity of 42% was used.

The substrate was immersed in the polymerizable composition according to Example 1, and then pulled up from the polymerizable composition. In this manner, a first structure in which the polymerizable composition was supported on the substrate was obtained. Both main surfaces of the first structure were covered with a PET film. The first structure was irradiated with ultraviolet rays from one main surface of the first structure using an LED to yield a second structure. The irradiation wavelength was 365 nm, the irradiation intensity was 100 $mW/cm^2$, and the irradiation time was 1 minute.

Next, the second structure was placed in a thermal dryer and subjected to a heating treatment. The heating temperature was set to 120°C, and the heating time was set to 15 minutes, and the surface temperature of the film was thus about 110°C. The PET film was peeled off from the second structure after the heating to yield an ion-exchange membrane.

(Examples 25 to 28)

A plurality of ion-exchange membranes were produced in the same manner as that in Example 24 except that each of the polymerizable compositions shown in Table 3 was used.

<Performance Evaluation>

(Measurement of Membrane Thickness)

The thickness of the ion-exchange membrane obtained in each of Examples 24 to 28 was measured. Specifically, measurement was performed using ID-H0530 manufactured by Mitutoyo Corporation.

(Measurement of Ion-Exchange Capacity and Water Content)

The ion-exchange capacity (IEC) and the water content of the ion-exchange membrane obtained in each of Examples 24 to 28 were measured.

Specifically, the ion-exchange membrane was first immersed in a 0.2 mol/L $NaNO_3$ aqueous solution for 10 hours or more to replace the chloride ion as the counter ion with a nitrate ion. In the ion-exchange membrane according to Examples 24 to 28, the counter ion was replaced with a chloride ion prior to the conversion into the nitrate ion. The replacement with the chloride ion was performed by immersing the ion-exchange membrane in a 0.5 mol/L HCl aqueous solution for 10 hours or more.

The amount of the chloride ion released during the replacement with the nitrate ion was measured with a potentiometric titrator using a silver nitrate aqueous solution. The obtained value was defined as A (mol). As the potentiometric titrator, COMTITE-900, manufactured by Hiranuma Sangyo Co., Ltd. was used.

Next, the ion-exchange membrane was immersed in a 1 mol/L HCl aqueous solution for 4 hours or more. After the immersion, the ion-exchange membrane was sufficiently washed with ion-exchange water, and then the moisture on the surface was wiped off, and the weight of the ion-exchange membrane was measured. The obtained value was defined as

W (g). The ion-exchange membrane was dried under reduced pressure at 60°C for 5 hours, and the weight after the drying was measured. The obtained value was defined as D (g). Based on the amount (A) of the free chloride ion and the weight (D) of the ion-exchange membrane after the drying, the anion-exchange capacity of the ion-exchange membrane was determined by the following Formula.

$$\text{Anion-exchange capacity [mmol/g-dry weight]} = A \times 1000/D$$

In addition, the water content of the ion-exchange membrane was determined by the following Formula based on the weight (W) of the ion-exchange membrane in a wet state and the weight (D) of the ion-exchange membrane after the drying.

$$\text{Water content [\%]} = (W\text{-}D)/D \times 100.$$

(Measurement of Membrane Resistance)

The membrane resistance of the ion-exchange membrane obtained in each of Examples 24 to 28 was measured. The results are shown in Table 3.

Specifically, the ion-exchange membrane was first immersed in a 0.5 mol/L NaCl aqueous solution for 30 minutes or more. The ion-exchange membrane after the immersion was placed at the center of a two-chamber cell equipped with a platinum electrode. Both sides of the ion-exchange membrane were filled with a 0.5 mol/L NaCl aqueous solution, and the resistance value between the electrodes at 25°C was measured by an AC bridge (frequency: 1000 cycles/second). Next, the resistance value between the electrodes in the case where the ion-exchange membrane was not installed was measured. The resistance value between the electrodes without the ion-exchange membrane was subtracted from the resistance value between the electrodes after the ion-exchange membrane was installed. The obtained value was defined as a membrane resistance.

[Table 3]

Table 3

| | Polymerizable composition | | Ion-exchange membrane | | |
|---|---|---|---|---|---|
| | Example | Hydroxy group-containing compound | IEC/membrane thickness | Water content (%) | Membrane resistance ($\Omega \cdot cm^2$) |
| Example 24 | Example 1 | 1-Butanol | 0.070 | 59 | 0.38 |
| Example 25 | Example 3 | 1-Hexanol | 0.072 | 58 | 0.35 |
| Example 26 | Example 7 | 1-Decanol | 0.069 | 66 | 0.33 |
| Example 27 | Example 11 | 1-Dodecanol | 0.069 | 58 | 0.4 |
| Example 28 | Example 23 | 1,2-Decanediol | 0.071 | 49 | 0.42 |

As is clear from the above examples, the polymerizable composition according to an embodiment of the present invention can be prepared without causing phase separation even when a photopolymerization initiator is used, and therefore, the production efficiency of the cured product of the polymerizable composition is excellent, and the polymerizable composition can be used as an ion-exchange resin or an ion-exchange membrane. In a preferred embodiment, the impregnation is also excellent.

In addition, by using such a polymerizable composition, a membrane electrode assembly and a hydrogen production device can be efficiently produced.

Hereinafter, preferred embodiments will be additionally described.

[1] A polymerizable composition including:
a quaternary ammonium salt represented by the following Formula (I):

a polymerizable monomer;
a linear or branched alkylene glycol having carbon number of 1 or more and 4 or less; and
at least one hydroxy group-containing compound selected from the group consisting of a primary alcohol having carbon number of 4 or more and 15 or less, a secondary alcohol having carbon number of 4 or more and 15 or less, and a diol having carbon number of 5 or more and 15 or less, the diol having a hydroxy group bonded to a secondary carbon atom:

[Chem 4]

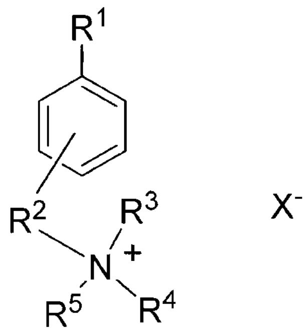

(I)

wherein
$R^1$ represents an alkenyl group having carbon number of 2 or more and 5 or less,
$R^2$ represents an alkylene group having carbon number of 1 or more and 10 or less,
$R^3$, $R^4$, and $R^5$ each independently represent a linear or branched alkyl group having carbon number of 1 or more and 4 or less or a linear or branched alkoxy group having carbon number of 1 or more and 4 or less, and
$X^-$ is an anion.

[2] The polymerizable composition according to [1], wherein a concentration of the quaternary ammonium salt represented by Formula (I) is 5 mass% or more and 95 mass% or less.
[3] The polymerizable composition according to [1] or [2], wherein a concentration of the hydroxy group-containing compound is 1 mass% or more and 10 mass% or less.
[4] The polymerizable composition according to any one of [1] to [3], wherein a concentration of the alkylene glycol is 1 mass% or more and 50 mass% or less.
[5] The polymerizable composition according to any one of [1] to [4], wherein a concentration of the polymerizable monomer is 1 mass% or more and 50 mass% or less.
[6] The polymerizable composition according to any one of [1] to [5], wherein the quaternary ammonium salt contains at least one salt selected from the group consisting of (vinylbenzyl)trimethylammonium chloride, (vinylbenzyl) trimethylammonium triflate, and (vinylbenzyl)trimethylammonium bistrifluoromethanesulfonylimide.
[7] The polymerizable composition according to any one of [1] to [6], wherein the hydroxy group-containing compound contains at least one compound selected from the group consisting of a primary aliphatic alcohol having carbon number of 4 or more and 15 or less, a secondary aliphatic alcohol having carbon number of 4 or more and 15 or less, and an aliphatic diol having carbon number of 5 or more and 15 or less, the aliphatic diol having a hydroxy group bonded to a secondary carbon atom.
[8] The polymerizable composition according to any one of [1] to [6], wherein the hydroxy group-containing compound contains at least one primary alcohol selected from the group consisting of 1-butanol, 1-pentanol, 1-hexanol, 1-heptanol, 1-octanol, 1-nonanol, 1-decanol, isodecanol, tridecanol, 1-undecanol, and 1-dodecanol.
[9] The polymerizable composition according to any one of [1] to [6], wherein the hydroxy group-containing compound contains at least one secondary alcohol selected from the group consisting of 2-butanol, 3-pentanol, 3-hexanol, 3-heptanol, 2-undecanol, 2-dodecanol, cyclopentanol, cyclohexanol, and cyclooctanol.
[10] The polymerizable composition according to any one of [1] to [6], wherein the hydroxy group-containing compound contains at least one diol selected from the group consisting of 1,2-hexanediol, 1,2-octanediol, and 1,2-decanediol.
[11] The polymerizable composition according to any one of [1] to [6], wherein the hydroxy group-containing compound contains at least one compound selected from the group consisting of 1-hexanol, 1-heptanol, 1-octanol, 1-nonanol, 1-decanol, isodecanol, tridecanol, 1-undecanol, 1-dodecanol, 3-heptanol, 2-undecanol, 2-dodecanol, and 1, 2-decanediol.
[12] The polymerizable composition according to any one of [1] to [11], wherein the hydroxy group-containing

compound has a flash point of 50°C or more.

[13] The polymerizable composition according to any one of [1] to [12], wherein the polymerizable monomer contains at least one compound selected from the group consisting of divinylbenzene, 1,2-bis(4-vinylphenyl)ethane, trivinylbenzene, 1,6-bis(4-vinylbenzyloxy)hexane, and N,N-dimethyl-N-(4-vinylbenzyl)-4-(4-vinylphenyl)butan-1-ammonium chloride.

[14] The polymerizable composition according to any one of [1] to [13], wherein a ratio M1/M2 of a mass M1 of the hydroxy group-containing compound to a mass M2 of the alkylene glycol is 0.02 or more and 10 or less.

[15] The polymerizable composition according to any one of [1] to [14], further including a polymerization initiator.

[16] The polymerizable composition according to [15], wherein the polymerization initiator contains at least one compound selected from the group consisting of benzoyl peroxide, p-chlorobenzoyl peroxide, decanoyl peroxide, lauroyl peroxide, acetyl peroxide, tert-butyl peroxyoctoate, 1-phenyl-2-hydroxy-2-methylpropan-1-one, 1-hydroxycyclohexyl phenyl ketone, 1-(4-isopropylphenyl)-2-hydroxy-2-methylpropan-1-one, phenylbis(2,4,6-trimethylbenzoyl)phosphine oxide, 2-benzyl-2-(N,N-dimethylamino)-1-(4-morpholinophenyl)butan-1-one, and 2-methyl-1-[4-(methylthio)phenyl]-2-2 morpholinopropan-1-one.

[17] An ion-exchange resin including a cured product of the polymerizable composition according to any one of [1] to [16].

[18] An ion-exchange membrane including the ion-exchange resin according to [17] and a substrate.

[19] A membrane electrode assembly including the ion-exchange membrane according to [18] and an electrode.

[20] A hydrogen production device including the ion-exchange membrane according to [18].

Reference Signs List

1. hydrogen production device, 2. first electrode chamber, 3. second electrode chamber, 4. membrane electrode assembly, 5. anion-exchange membrane 5, 6. first electrode, 7. second electrode, 8. hydrogen discharge pipe, 9. oxygen discharge pipe, 10. water supply pipe 10.

## Claims

**1.** A polymerizable composition comprising:

a quaternary ammonium salt represented by the following Formula (I);
a polymerizable monomer;
a linear or branched alkylene glycol having carbon number of 1 or more and 4 or less; and
at least one hydroxy group-containing compound selected from the group consisting of a primary alcohol having carbon number of 4 or more and 15 or less, a secondary alcohol having carbon number of 4 or more and 15 or less, and a diol having carbon number of 5 or more and 15 or less, the diol having a hydroxy group bonded to a secondary carbon atom:

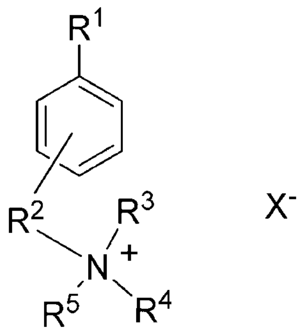

(I)

wherein
$R^1$ represents an alkenyl group having carbon number of 2 or more and 5 or less,
$R^2$ represents an alkylene group having carbon number of 1 or more and 10 or less,
$R^3$, $R^4$, and $R^5$ each independently represent a linear or branched alkyl group having carbon number of 1 or more and 4 or less or a linear or branched alkoxy group having carbon number of 1 or more and 4 or less, and
$X^-$ is an anion.

2. The polymerizable composition according to claim 1, wherein a content of the quaternary ammonium salt is 5 mass% or more and 95 mass% or less.

3. The polymerizable composition according to claim 1 or 2, wherein a content of the hydroxy group-containing compound is 1 mass% or more and 10 mass% or less.

4. The polymerizable composition according to any one of claims 1 to 3, wherein a content of the alkylene glycol is 1 mass% or more and 50 mass% or less.

5. The polymerizable composition according to any one of claims 1 to 4, wherein a content of the polymerizable monomer is 1 mass% or more and 50 mass% or less.

6. The polymerizable composition according to any one of claims 1 to 5, wherein the quaternary ammonium salt comprises at least one salt selected from the group consisting of (vinylbenzyl)trimethylammonium chloride, (vinylbenzyl)trimethylammonium triflate, and (vinylbenzyl)trimethylammonium bistrifluoromethanesulfonylimide.

7. The polymerizable composition according to any one of claims 1 to 6, wherein the hydroxy group-containing compound comprises at least one compound selected from the group consisting of a primary aliphatic alcohol having carbon number of 4 or more and 15 or less, a secondary aliphatic alcohol having carbon number of 4 or more and 15 or less, and an aliphatic diol having carbon number of 5 or more and 15 or less, the aliphatic diol having a hydroxy group bonded to a secondary carbon atom.

8. The polymerizable composition according to any one of claims 1 to 7, wherein the hydroxy group-containing compound comprises at least one primary alcohol selected from the group consisting of 1-butanol, 1-pentanol, 1-hexanol, 1-heptanol, 1-octanol, 1-nonanol, 1-decanol, isodecanol, tridecanol, 1-undecanol, and 1-dodecanol.

9. The polymerizable composition according to any one of claims 1 to 8, wherein the hydroxy group-containing compound comprises at least one secondary alcohol selected from the group consisting of 2-butanol, 3-pentanol, 3-hexanol, 3-heptanol, 2-undecanol, 2-dodecanol, cyclopentanol, cyclohexanol, and cyclooctanol.

10. The polymerizable composition according to any one of claims 1 to 9, wherein the hydroxy group-containing compound comprises at least one diol selected from the group consisting of 1,2-hexanediol, 1,2-octanediol, and 1,2-decanediol.

11. The polymerizable composition according to any one of claims 1 to 10, wherein the hydroxy group-containing compound comprises at least one compound selected from the group consisting of 1-hexanol, 1-heptanol, 1-octanol, 1-nonanol, 1-decanol, isodecanol, tridecanol, 1-undecanol, 1-dodecanol, 3-heptanol, 2-undecanol, 2-dodecanol, and 1,2-decanediol.

12. The polymerizable composition according to any one of claims 1 to 11, wherein the hydroxy group-containing compound has a flash point of 50°C or more.

13. The polymerizable composition according to any one of claims 1 to 12, wherein the polymerizable monomer comprises at least one compound selected from the group consisting of divinylbenzene, 1,2-bis (4-vinylphenyl) ethane, trivinylbenzene, 1,6-bis(4-vinylbenzyloxy)hexane, and N,N-dimethyl-N-(4-vinylbenzyl)-4-(4-vinylphenyl)butane-1-ammonium chloride.

14. The polymerizable composition according to any one of claims 1 to 13, wherein a value of a ratio M1/M2 of a mass M1 of the hydroxy group-containing compound to a mass M2 of the alkylene glycol is 0.02 or more and 10 or less.

15. The polymerizable composition according to any one of claims 1 to 14, further comprising a polymerization initiator.

16. The polymerizable composition according to claim 15, wherein the polymerization initiator comprises at least one compound selected from the group consisting of benzoyl peroxide, p-chlorobenzoyl peroxide, decanoyl peroxide, lauroyl peroxide, acetyl peroxide, tert-butyl peroxyoctoate, 1-phenyl-2-hydroxy-2-methylpropan-1-one, 1-hydroxycyclohexyl phenyl ketone, 1-(4-isopropylphenyl)-2-hydroxy-2-methylpropan-1-one, phenylbis(2,4,6-trimethylbenzoyl)phosphine oxide, 2-benzyl-2-(N,N-dimethylamino)-1-(4-morpholinophenyl)butan-1-one, and 2-methyl-1-[4-(methylthio)phenyl]-2-2 morpholinopropan-1-one.

**17.** An ion-exchange resin comprising a cured product of the polymerizable composition according to any one of claims 1 to 16 and/or an ion exchanger of an anion of the polymerizable composition according to any one of claims 1 to 16.

**18.** An ion-exchange membrane comprising the ion-exchange resin according to claim 17 and a substrate.

**19.** A membrane electrode assembly comprising the ion-exchange membrane according to claim 18 and an electrode.

**20.** A hydrogen production device comprising the ion-exchange membrane according to claim 18.

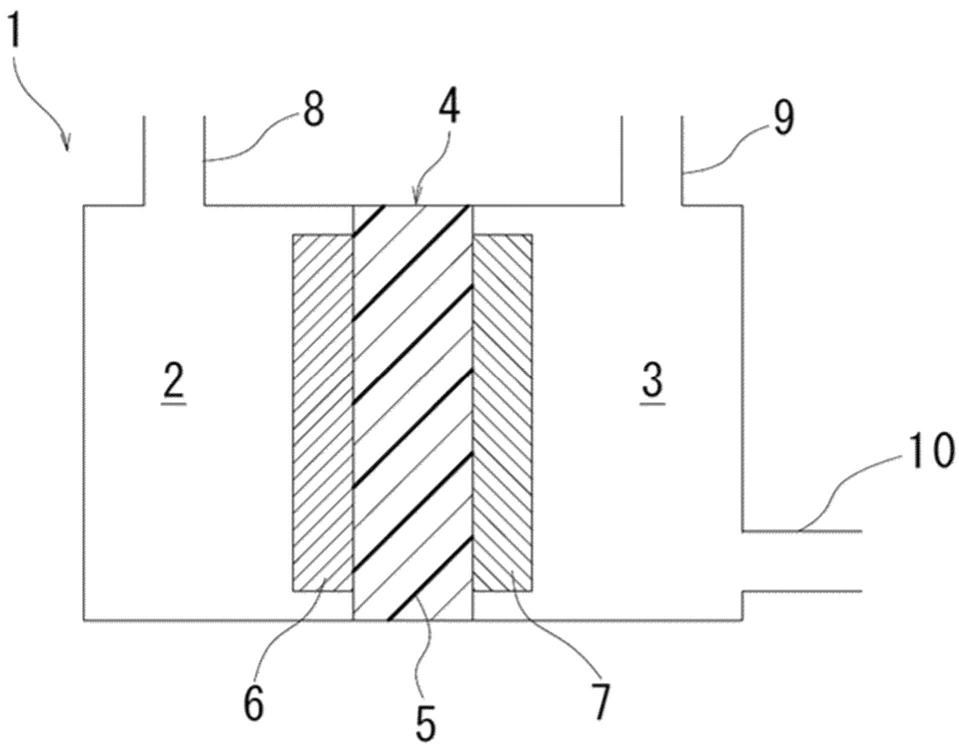


Fig. 1

## INTERNATIONAL SEARCH REPORT

International application No.
**PCT/JP2024/015190**

### A. CLASSIFICATION OF SUBJECT MATTER

***C08F 212/14***(2006.01)i; ***B01J 41/04***(2017.01)i; ***B01J 41/14***(2006.01)i; ***C08F 2/44***(2006.01)i; ***C08F 2/48***(2006.01)i; ***C08J 5/22***(2006.01)i; ***C08K 5/05***(2006.01)i; ***C08L 25/18***(2006.01)i; ***C25B 1/04***(2021.01)i; ***C25B 9/00***(2021.01)i; ***C25B 13/08***(2006.01)i; ***H01M 8/1004***(2016.01)i

FI: C08F212/14; B01J41/04; B01J41/14; C08F2/44 B; C08F2/48; C08J5/22 CER; C08J5/22 104; C08K5/05; C08L25/18; C25B1/04; C25B9/00 A; C25B13/08 301; H01M8/1004

According to International Patent Classification (IPC) or to both national classification and IPC

### B. FIELDS SEARCHED

Minimum documentation searched (classification system followed by classification symbols)

C08F2/00-299/08; C08L1/00-101/16; C08K3/00-13/08; B01J41/00-41/20; C08J3/00-7/18; C25B1/00-15/08; H01M8/00-8/2495

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X<br>A | US 5145618 A (IONICS, INCORPORATED) 08 September 1992 (1992-09-08)<br>claims, examples, for example, example 7, etc. | 17-20<br>1-16 |
| X<br>A | JP 2015-47537 A (FUJIFILM CORPORATION) 16 March 2015 (2015-03-16)<br>claims, examples, for example, example 16, etc. | 17-20<br>1-16 |
| X<br>A | JP 2012-79619 A (TOKUYAMA CORPORATION) 19 April 2012 (2012-04-19)<br>claims, particularly, claim 5, examples, for example, example 2, etc. | 17-20<br>1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 July 2024** | **16 July 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

INTERNATIONAL SEARCH REPORT

International application No.
**PCT/JP2024/015190**

C. DOCUMENTS CONSIDERED TO BE RELEVANT

| Category* | Citation of document, with indication, where appropriate, of the relevant passages | Relevant to claim No. |
|---|---|---|
| X<br>A | JP 2000-212306 A (MITSUBISHI CHEMICAL CORP.) 02 August 2000 (2000-08-02)<br>claims, examples, for example, example 6, etc. | 17-20<br>1-16 |
| X<br>A | JP 2022-502522 A (EVOQUA WATER TECHNOLOGIES LLC) 11 January 2022 (2022-01-11)<br>claims, examples, for example, table 3, etc. | 17-20<br>1-16 |
| X<br>A | WO 2011/125717 A1 (TOKUYAMA CORPORATION) 13 October 2011 (2011-10-13)<br>claims, examples, for example, table 1, etc. | 17-20<br>1-16 |
| A | JP 2020-519743 A (BL TECHNOLOGIES, INC.) 02 July 2020 (2020-07-02) | 1-20 |
| A | US 2016/0030894 A1 (SALTWORKS TECHNOLOGIES, INC.) 04 February 2016 (2016-02-04) | 1-20 |

Form PCT/ISA/210 (second sheet) (July 2022)

**INTERNATIONAL SEARCH REPORT**
**Information on patent family members**

International application No.
**PCT/JP2024/015190**

| Patent document cited in search report | Publication date (day/month/year) | Patent family member(s) | Publication date (day/month/year) |
|---|---|---|---|
| US 5145618 A | 08 September 1992 | US 5264125 A<br>US 5056996 A<br>US 5194189 A | |
| JP 2015-47537 A | 16 March 2015 | WO 2015/030072 A1 | |
| JP 2012-79619 A | 19 April 2012 | (Family: none) | |
| JP 2000-212306 A | 02 August 2000 | (Family: none) | |
| JP 2022-502522 A | 11 January 2022 | US 2021/0340343 A1<br>claims, examples, for example, table 3, etc.<br>CN 112752789 A<br>KR 10-2021-0068070 A | |
| WO 2011/125717 A1 | 13 October 2011 | (Family: none) | |
| JP 2020-519743 A | 02 July 2020 | US 2020/0071462 A1<br>WO 2018/212748 A1<br>CN 110785437 A | |
| US 2016/0030894 A1 | 04 February 2016 | US 2015/0044366 A1<br>WO 2013/155608 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022502522 A
- WO 2016027595 A
- WO 2011125717 A